# EUROPEAN PATENT APPLICATION

(11) **EP 4 566 839 A1**
(43) Date of publication of application: **11.06.2025**
(21) Application number: 24216045.5
(22) Date of filing: 28.11.2024
(51) Int. Cl.: B60C 1/00, C08L 7/00, C08K 9/06, C08K 3/36, C08K 3/06, C08K 3/22, C08K 5/09, C08K 5/098

(54) **COATING COMPOSITION**

(30) Priority: 07.12.2023 US 202318532643
(71) Applicant: The Goodyear Tire & Rubber Company, Akron, OH 44316 (US)
(72) Inventor: JOHNSON, Dawn Michelle, Uniontown, 44685 (US); WELTER, Carolin Anna, 54340 Schleich (DE)
(74) Representative: Kutsch, Bernd

(57) **Abstract**

A rubber composition contains at least one elastomer including at least one conjugated diene elastomer, a pre-silanized precipitated silica, a high surface area (e.g., CTAB surface area of at least 200 m²/g) silica, a tear strength agent, a sulfur-based curing agent, and an accelerator for the curing agent. The rubber composition may be used to form tires.

## Description

### BACKGROUND

The present disclosure relates to rubber compositions and in particular, to a composition suited to use as a coating for cords/wires used in plies of a tire, such as a carcass ply, a tire belt ply, a tire overlay ply, or a ply strip.

To provide added strength, tires often contain reinforcing materials in the form of metal or fabric cords. Each cord may be composed of one or more wires. The cords are generally encapsulated in a rubber material to form a ply. Each ply may incorporate several cords, running generally in parallel to each other. To provide good tire properties, such as low rolling resistance, it is desirable to provide a tire with internal components and plies of reinforced rubber composites having low hysteresis (e.g., as determined using the Tangent Delta (tan Δ) measurement), while maintaining other desirable properties. In the case of plies used in the carcass of the tire, for example, it is desirable to optimize elongation properties and high wire cord adhesion, in combination with low hysteresis.

To modify tire properties, coating compositions containing natural rubber and reinforcing materials, such as carbon black, and particulate filler have been developed for forming plies. A coupling agent may be incorporated into the cord-reinforced rubber composition for coupling fillers, such as silica, to the natural rubber, as described, for example, in U.S. Pub. No. 20060169382 A1. This rubber composition also includes the resinous reaction product of hexamethoxymethylmelamine and a methylene acceptor compound, and also includes a cobalt salt. U.S. Pub. No. 20090151838 A1 describes use of a resin which is the reaction product of hexamethoxymethylmelamine and a methylene acceptor (phenol Novolac resin or resorcinol) that is formed in situ within the rubber composition. While the addition of such resin systems may result in improved stiffness and/or adhesion properties, it also has some disadvantages, such as a more complex mixing process.

The precipitated silica used in a coating composition may be pre-silanized, as described in U.S. Pat. No. 11,441,019. This ply coat rubber composition also includes a cobalt salt and optionally a resin and/or an oil.

Carbon black is often used in coating compositions, e.g., in place of silica. U.S. Pat. No. 6,220,326 B1 describes a tire including a carcass ply including a cord reinforced rubber composition formed without silica, including natural rubber, a cis-1,4-polybutadiene rubber and optionally up to 10 phr of another rubber; a carbon black with specific properties; and a natural rosin acid. U.S. Pat. No. 10,072,154 describes a carbon black product useful in elastomer compositions for tires and their components which includes aggregates of carbon black having specific properties that are intermediate those of some existing grades. The product is indicated to exhibit low rolling resistance and low heat build-up under service conditions when incorporated into rubber compositions for tires.

One problem with many existing coating formulations is that they are unable to yield improvements in elongation and wire adhesion properties without sacrificing other properties (e.g., hysteresis and stiffness), and vice versa.

### SUMMARY OF THE INVENTION

The invention relates to a rubber composition in accordance with claim 1, to a cord-reinforced rubber component for a tire in accordance with claim 11, to a tire in accordance with claim 14 and to a method in accordance with claims 15.

Dependent claims refer to preferred embodiments of the invention.

Disclosed is, in some preferred embodiments, is a rubber composition containing: 100 phr of elastomer, the elastomer including 60-100 phr of a conjugated diene elastomer; a pre-silanized precipitated silica; a high surface area silica; at least 0.1 phr of a tear strength agent; a sulfur-based curing agent; and an accelerator for the curing agent.

The rubber composition may contain 30 phr to 80 phr of the pre-silanized precipitated silica; 1 phr to 20 phr of the high surface area silica; and 0.1 phr to 3 phr of the tear strength agent.

In some embodiments, the rubber composition contains 40 phr to 70 phr of the pre-silanized precipitated silica; 3 phr to 12 phr of the high surface area silica; and 0.3 phr to 2 phr of the tear strength agent.

The rubber composition may contain 50 phr to 60 phr of the pre-silanized precipitated silica; 4 phr to 9 phr of the high surface area silica; and 0.5 phr to 1.1 phr of the tear strength agent.

In some preferred embodiments, the pre-silanized precipitated silica has a CTAB surface area of 130 m²/g to 210 m²/g.

The rubber composition may be devoid of carbon black.

In some preferred embodiments, the rubber composition contains from 0 phr to 5 phr of carbon black.

The rubber composition may contain at least 0.1 phr of a silica coupling agent.

In some preferred embodiments, the rubber composition contains at least 0.1 phr of a cobalt salt.

The tear strength agent may include 3-methyl-5-pyrazolone.

In some embodiments, the rubber composition includes at least 1 phr of zinc oxide.

The rubber composition may contain at least 0.5 phr of a fatty acid.

In some embodiments, the rubber composition contains at least 0.2 phr of the accelerator.

Cord-reinforced rubber components for a tire including a plurality of cords encapsulated by the rubber composition are also contemplated.

The cord-reinforced rubber component may include a tire ply.

In some embodiments, the cords each include at least one of metal wires and a fabric material.

Tires including the cord-reinforced rubber component are also contemplated.

Disclosed, in other preferred embodiments, is a method of forming a cord-reinforced rubber component. The method includes forming a rubber composition, coating at least one cord with the rubber composition; and curing the rubber composition coating the at least one cord to form the cord-reinforced rubber component. The rubber composition may be formed by combining 100 phr of elastomer, the elastomer comprising 60-100 phr of a conjugated diene elastomer with a pre-silanized silica, a high surface area silica, at least 0.1 phr of a tear strength agent, a sulfur-based curing agent, and an accelerator for the curing agent.

The method may further include assembling uncured components of a tire, the components of the tire including a tire tread and the cord-reinforced rubber component.

Disclosed, in further preferred embodiments, is a ply of a tire formed by coating a plurality of cords with a rubber composition and curing the rubber composition. The rubber composition includes: 100 phr of elastomer comprising 60-100 phr cis 1,4 polyisoprene; 30 phr to 80 phr of a pre-silanized precipitated silica; 1 phr to 20 phr silica having a CTAB surface area of at least 200 m²/g; 0.1 phr to 3 phr of a tear strength agent; 0.1 phr to 6 phr of a silica coupling agent; 0.1 phr to 5 phr of a cobalt salt; 0.1 phr to 10 phr of an antidegradant; 0.5 phr to 10 phr of a fatty acid; 1 phr to 20 phr of zinc oxide; 0.1 phr to 10 phr of a sulfur-based curing agent; and 0.2 phr to 5 phr of a cure accelerator.

### BRIEF DESCRIPTION OF THE DRAWINGS

FIG. 1 is a schematic cross-sectional view of a tire in accordance with some embodiments; and
FIG. 2 is a schematic cross-section of a ply (e.g., a belt, carcass or overlay ply) including cords coated with a rubber composition in accordance with another embodiment.

### DETAILED DESCRIPTION OF PREFERRED EMBODIMENTS

The present disclosure may be understood more readily by reference to the following detailed description of desired embodiments included therein and the drawings. In the following specification and the claims which follow, reference will be made to a number of terms which shall be defined to have the following meanings.

Unless otherwise defined, all technical and scientific terms used herein have the same meaning as commonly understood by one of ordinary skill in the art. In case of conflict, the present document, including definitions, will control. Methods and materials are described below, although methods and materials similar or equivalent can be used in practice or testing of the present disclosure.

As used in the specification and in the claims, the term "comprising" may include the embodiments "consisting of" and "consisting essentially of." The terms "comprise(s)," "include(s)," "having," "has," "can," "contain(s)," and variants thereof, as used herein, are intended to be open-ended transitional phrases that require the presence of the named ingredients/steps and permit the presence of other ingredients/steps. However, such description should be construed as also describing compositions, mixtures, or processes as "consisting of" and "consisting essentially of" the enumerated ingredients/steps, which allows the presence of only the named ingredients/steps, along with any impurities that might result therefrom, and excludes other ingredients/steps.

All ranges disclosed herein are inclusive of the recited endpoint and independently combinable (for example, the range of "from 2 to 10" is inclusive of the endpoints, 2 and 10, and all the intermediate values).

In the description, the term "phr" refers to parts of a respective material per 100 parts by weight of rubber, or elastomer. The term "phf" refers to parts per hundred filler, by weight. By convention, the uncured rubber employed in the rubber composition totals 100 phr.

The terms "rubber" and "elastomer" may be used interchangeably unless otherwise indicated. The terms "cure" and "vulcanize" may be used interchangeably unless otherwise indicated.

As used herein, the term "high surface area silica" or "relatively high surface area silica" refers to a silica having a CTAB surface area of at least 200 m²/g.

The present disclosure relates to rubber compositions and in particular, to a composition suited to use as a coating for cords/wires used in plies of a tire, such as a carcass ply, a tire belt ply, a tire overlay ply, or a ply strip.

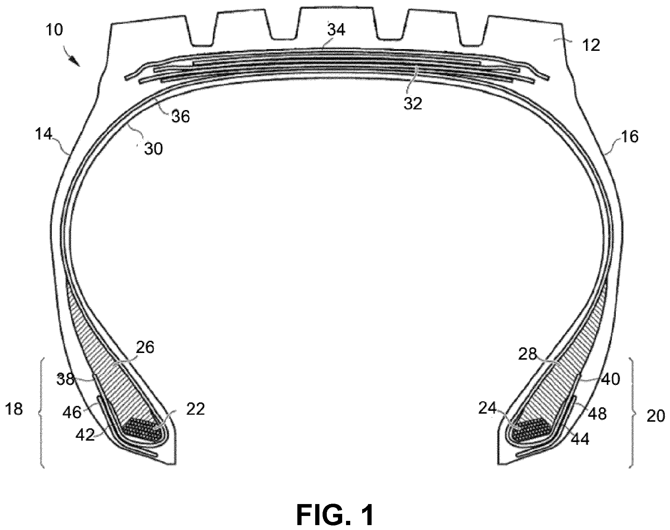

With reference to FIG. 1, a pneumatic tire 10 includes a tire tread 12, which defines a road-contacting surface of the tire. Two sidewalls 14, 16, extend from the tread to respective bead regions 18, 20. Each bead region includes a bead or beads 22, 24, that may be held in place by respective bead filler apexes 26, 28. An inner liner 30, defines an inner-most surface of the tire.

The tire includes a belt structure including a set of belt plies 32 (four in the illustrated embodiment), an overlay ply 34, which covers the belt plies, and a carcass ply 36, interior of the belt plies. The illustrated carcass ply 36 includes a pair of axially opposite end portions 38, 40, each of which is associated with a respective one of the beads 22, 24. Each axial end portion 38, 40 of the carcass ply 36 may be turned up and around the respective bead to a position to anchor the respective axial end portion. The turned-up portion 38, 40 of the carcass ply may engage the axial outer surfaces of respective flippers 42, 44 and axial inner surfaces of respective chippers 46, 48. The example tread 10 has circumferential grooves (four in the illustrated embodiment), each groove defining a U-shaped opening in the tread 10. The tread 12, sidewalls, and carcass may be formed of one or more rubber-based compositions. The example tire is suitable, for example, for mounting on a rim of a vehicle, e.g., a truck or a passenger car. As will be appreciated, the general construction of the tire 10 may differ from that illustrated in FIG. 1 and may include fewer or more components.

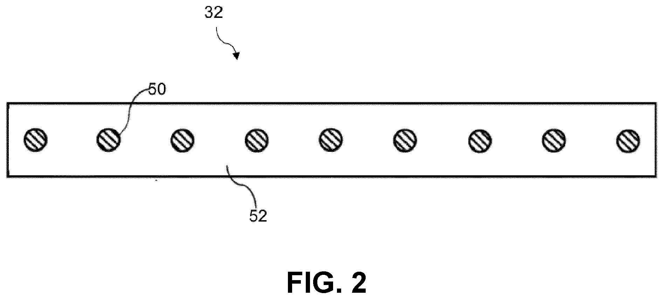

As illustrated in FIG. 2, one or more of the components of the tire, in particular, the belt plies 32, the overlay ply 34, and/or the carcass ply 36, may include a set of substantially parallel reinforcing members, such as cords 50, e.g., at least two cords, or at least three or at least four cords, or up to ten cords. The cords may be made of metal wire(s), a fabric material, such as polyester, rayon, or similar suitable organic polymeric material, or combinations thereof. The cords are spaced by and encapsulated in a strip 52 formed from a rubber composition as described herein. The cords 50 serve to reinforce the rubber composition in the strip 52.

Each ply may be formed in a wire calendar in which a plurality of essentially parallel cords, e.g., metal wires is coated from both sides with a layer or sheet of the exemplary rubber composition. During curing, the cords are embedded in the strip of rubber composition 52, reinforcing the same. In some embodiments, prior to coating with the rubber composition, the cords 50 may be dipped in a dipping solution or emulsion for better adhesion to the rubber composition.

### The Rubber Composition

The exemplary rubber composition suitable for forming the plies includes an elastomer component, including at least one conjugated diene; a reinforcing filler component, including a pre-silanized precipitated silica and a high surface area silica; a cobalt salt; a tear strength agent; and a cure package including a sulfur-based curing agent.

The exemplary rubber composition provides low hysteresis to the carcass plies and/or other plies. As a result, a tire, e.g., a truck tire, formed with such plies has a low rolling resistance.

### The Elastomer Component

The exemplary rubber composition includes 100 phr of elastomer(s), including at least one conjugated diene elastomer. In some embodiments, at least 60 phr, or at least 80 phr, or at least 90 phr, or at least 95 phr, or up to 100 phr of the elastomer component is conjugated diene elastomer(s). In some embodiments, the conjugated diene elastomer is selected from natural rubber, a synthetic cis-1,4-polyisoprene, and mixtures thereof. In particular embodiments, the elastomer(s) consist of or consist essentially of natural rubber.

The glass transition temperature (Tg) of an elastomer or elastomer composition, where referred to herein, represents the glass transition temperature(s) of the respective elastomer or elastomer composition in its uncured state or possibly a cured state in the case of an elastomer composition. Tg values referred to herein are determined as a peak midpoint by a differential scanning calorimeter (DSC) at a temperature rate of increase of 10° C per minute, according to ASTM D3418-21, "Standard Test Method for Transition Temperatures and Enthalpies of Fusion and Crystallization of Polymers by Differential Scanning Calorimetry."

Natural rubber is derived predominantly from isoprene (2-methyl-1,3-butadiene) and thus is predominantly (e.g., at least 99 wt.%) polyisoprene, particularly cis-1,4-polyisoprene. As used herein, the term "natural rubber" means naturally-occurring rubber, such as can be harvested from sources such as Hevea rubber trees and non-Hevea sources (e.g., guayule shrubs and dandelions such as TKS). In other words, the term "natural rubber" should be construed so as to exclude synthetic polyisoprene. Natural rubber produced from field grade coagulum (cuplump) from the Hevea brasiliensis tree is a common form of natural rubber. For example, technically specified or block rubber (TSR), is a natural rubber available from Indonesia, where it may be referred to as Standard Indonesian Rubber (SIR), Malaysia (SMR), and Thailand (STR). It can be obtained in a number of grades, including TSR 10 and TSR 20, with the TSR 10 grade being of higher purity.

In some embodiments, the rubber composition includes at least 60 phr of natural rubber, or at least 80 phr, or at least 90 phr, or at least 92 phr, or at least 95 phr, or at least 98 phr, or up to 100 phr of natural rubber.

Natural rubber is desirable for tear properties (high tear strength) of the cord reinforced rubber composite, low hysteresis (relatively high hot rebound property), and good processability. However, a small amount of synthetic polyisoprene aids green tack properties. Synthetic polyisoprene, in particular, cis-1,4-polyisoprene with a cis content of at least 94 wt. %, may be employed. The cis-1,4-content of the synthetic polyisoprene may be at least 96 wt. %. The Tg of the synthetic polyisoprene may be in a range of - 60°C to -70°C.

In some embodiments, synthetic polyisoprene is absent from the rubber composition. In another embodiment, the rubber composition includes at least 2 phr synthetic polyisoprene, or at least 3 phr, or at least 4 phr, or at least 6 phr, or at least 10 phr, or up to 20 phr synthetic polyisoprene.

Other elastomers which may be present, in a total amount of up to 40 phr, or up to 20 phr, or up to 10 phr may be selected from the homopolymerization products of butadiene and its homologues and derivatives, for example, methylbutadiene, dimethylbutadiene, and pentadiene and copolymers formed from butadiene or its homologues or derivatives with other unsaturated monomers. Among the latter may be acetylenes, for example, vinyl acetylene, olefins, for example, isobutylene, which copolymerizes with isoprene to form butyl rubber, vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of such synthetic rubbers include neoprene (polychloroprene), polybutadiene (including cis 1,4-polybutadiene), butyl rubber, halobutyl rubber, such as chlorobutyl rubber and bromobutyl rubber, styrene/isoprene/butadiene rubber, copolymers of 1,3-butadiene or isoprene with monomers such as styrene, acrylonitrile and methyl methacrylate, ethylene/propylene terpolymers, also known as ethylene/propylene/diene monomers (EPDM), and in particular, ethylene/propylene/dicyclopentadiene terpolymers. Additional examples of elastomers which may be used include alkoxy-silyl end functionalized solution polymerized polymers (SBR, PBR, IBR and SIBR), and silicon-coupled and tin-coupled star-branched polymers.

### Reinforcing fillers

In some embodiments, the rubber composition includes silica and optionally carbon black as reinforcing fillers. These two fillers may be the only reinforcing fillers present in the rubber composition or one or more additional fillers may be present, such as up to 30 phr, or up to 20 phr, or up to 10 phr of other reinforcing fillers.

In some embodiments, carbon black is omitted. In other embodiments, a small amount of carbon black is included as a carrier for a coupling agent. In some embodiments, a ratio, by weight, of silica to carbon black may be at least 5:1, at least 10:1, at least 12:1, at least 14:1, at least 15:1, at least 16:1, at least 17:1, at least 18:1, at least 19:1, or at least 20:1.

The silica generally includes at least two distinct components including a pre-silanized precipitated silica and a high surface area silica (e.g., having a CTAB surface area of at least 200 m²/g). In some embodiments, a ratio, by weight, of pre-silanized precipitated silica to very high surface area silica may be at least 2:1, at least 3:1, at least 4:1, at least 5:1, at least 6:1, at least 7:1, at least 8:1, or at least 9:1.

### Pre-Silanized Precipitated Silica

The pre-silanized precipitated silica may be pretreated and/or pre hydrophobated.

In some embodiments, the pre-silanized and precipitated silica has a CTAB adsorption surface area of between 130 m²/g and 210 m²/g, optionally between 130 m²/g and 150 m²/g and/or between 190 m²/g and 210 m²/g, or even between 195 m²/g and 200 m²/g or 195 m²/g and 205 m²/g. The CTAB (cetyl trimethyl ammonium bromide) method for determination of the silica surface area (ASTM D6845) is known to the person skilled in the art.

In some embodiments, said pre-silanized precipitated silica is precipitated silica pre-reacted with a silica coupler comprised of bis(3-triethoxysilylpropyl)polysulfide containing an average of from 1 to 5 connecting sulfur atoms (preferably 2 to 4) in its polysulfidic bridge or an alkoxyorganomercaptosilane.

The mercaptosilane with its SH groups may improve compatibility with the rubber material or rubber matrix and/or support the curing process.

The amount mercapto groups on the surface of the silica may be in the range of between 0.1 and 1 weight percent, alternatively 0.4 to 1 weight percent or 0.4 to 0.6 weight percent.

In addition to the mercapto groups coupled to the silica, the silica may comprise a compatibilizer which is typically a (hydro-)carbon chain material having multiple carbon atoms (for instance at least 4 carbon atoms) along its chain. Such a compatibilizer may facilitate the mixing of the composition. In an example, the weight % of carbon surface load/functionalization is between 2 and 10, or alternatively between 3 and 8.

In another embodiment, pre-silanized precipitated silica is precipitated silica pre-reacted with a silica coupler comprising an alkoxyorganomercaptosilane.

In another embodiment, said pre-silanized precipitated silica is pre-hydrophobated, e.g., with a hydrocarbon chain material having multiple carbon atoms (for instance at least 4 carbon atoms) along its chain.

The precipitated silica reinforcement may, for example, be characterized by having a BET surface area, as measured using nitrogen gas, in the range of, for example, about 40 to about 600, and more usually in a range of about 50 to about 300 square meters per gram. The BET method of measuring surface area might be described, for example, in the Journal of the American Chemical Society, Volume 60, as well as ASTM D3037.

Such precipitated silicas may, for example, also be characterized by having a dibutylphthalate (DBP) absorption value, for example, in a range of about 100 cc/100 g to about 400 cc/100 g, and more usually about 150 cc/100 g to about 300 cc/100 g.

The pre-hydrophobated precipitated silica utilized is hydrophobated prior to its addition to the rubber composition by treatment with at least one silane. Suitable silanes include but are not limited to alkylsilanes, alkoxysilanes, organoalkoxysilyl polysulfides and organomercaptoalkoxysilanes.

In an alternative embodiment, the pre-hydrophobated precipitated silica may be pre-treated with a silica coupling agent comprised of, for example, an alkoxyorganomercaptoalkoxysilane or combination of alkoxysilane and organomercaptoalkoxysilane prior to blending the pre-treated silica with the rubber instead of reacting the precipitated silica with the silica coupling agent in situ within the rubber. For example, see U.S. Pat. No. 7,214,731, the teachings of which are incorporated herein for the purpose of describing pre-hydrophobated precipitated silica and techniques for making such pre-hydrophobated precipitated silica.

The prehydrophobated precipitated silica may optionally be treated with a silica dispersing aid. Such silica dispersing aids may include glycols, such as fatty acids, diethylene glycols, polyethylene glycols, fatty acid esters of hydrogenated or non-hydrogenated C₅ or C₆ sugars, and polyoxyethylene derivatives of fatty acid esters of hydrogenated or non-hydrogenated C₅ or C₆ sugars. Exemplary fatty acids include stearic acid, palmitic acid and oleic acid. Exemplary fatty acid esters of hydrogenated and non-hydrogenated C₅ and C₆ sugars (e.g., sorbose, mannose, and arabinose) include, but are not limited to, the sorbitan oleates, such as sorbitan monooleate, dioleate, trioleate and sesquioleate, as well as sorbitan esters of laurate, palmitate and stearate fatty acids. Exemplary polyoxyethylene derivatives of fatty acid esters of hydrogenated and non-hydrogenated C₅ and C₆ sugars include, but are not limited to, polysorbates and polyoxyethylene sorbitan esters, which are analogous to the fatty acid esters of hydrogenated and non-hydrogenated sugars noted above except that ethylene oxide groups are placed on each of the hydroxyl groups.

The optional silica dispersing aids, if used, are present in an amount ranging from about 0.1% to about 25% by weight based on the weight of the silica, with about 0.5% to about 20% by weight being suitable, and about 1% to about 15% by weight based on the weight of the silica also being suitable. Various pre-treated precipitated silicas are described in U.S. Pat. Nos. 4,704,414, 6,123,762 and 6,573,324. The teachings of U.S. Pat. Nos. 4,704,414, 6,123,762 and 6,573,324 are incorporated herein by reference.

In any case, the pre-hydrophobated precipitated silica is pre-hydrophobated by treating silica in an aqueous colloidal form thereof with both an organomercaptosilane and an alkylsilane in a weight ratio of said organomercaptosilane to said alkylsilane in a range of from 10/90 to 90/10; wherein said alkylsilane is of the general Formula (I):

Xₙ-Si-R₄₋ₙ (I)

wherein R is an alkyl radical having from 1 to 18 carbon atoms, preferably from 1 to 8, carbon atoms, such as, methyl, ethyl, isopropyl, n-butyl and octadecyl radicals, n is a numeral from 1 to 3 and X is a radical selected from halogens, namely chlorine or bromine, preferably a chlorine radical, and alkoxy radicals, preferably an alkoxy radical as (R¹O)-, wherein R¹ is an alkyl radical having from 1 to 3 carbon atoms, such as, methyl, ethyl and isopropyl radicals, preferably from methyl and ethyl radicals, and where said organomercaptosilane is of the general formula (II):

   (X)ₙ(R²O)₃₋ₙ-Si-R³-SH (II)
wherein X is a radical selected from halogens, such as chlorine or bromine, preferably a chlorine radical, and alkyl radicals having from 1 to 16 carbon atoms, preferably selected from methyl, ethyl, n-propyl, and n-butyl radicals; wherein R² is an alkyl radical having from 1 to 16 carbon atom, preferably from 1 to 4 carbon atoms, preferably selected from methyl and ethyl radicals and R³ is an alkylene radical having from 1 to 16 carbon atoms, preferably from 1 to 4 carbon atoms, preferably a propylene radical; wherein n represents an integer from 0 to 3 with n preferably representing zero.

The hydrophobated precipitated silica aggregates might be recovered, for example, from said treated colloidal silica, for example as a treated silica hydrosol, with the aid of acid addition to the treated colloidal silica (for example, sulfuric acid or hydrochloric acid) followed by water washing and drying the recovered hydrophobated silica as a hydrophobated silica gel or as a hydrophobated precipitated silica. While this disclosure is not intended to be directed to a specific preparation technique (preparation of silica hydrosols, recovery of silica gels and precipitated silicas, etc.) of the pre-hydrophobated precipitated silica itself, for education purposes in this regard, reference might be made to the aforesaid Condensed Chemical Dictionary and U.S. Pat. No. 5,094,829 as well as U.S. Pat. Nos. 5,708,069, 5,789,514 and 5,750,610 for a more detailed discussion.

Representative alkylsilanes of Formula (I) are, for example, trichloro methyl silane, dichloro dimethyl silane, chloro trimethyl silane, trimethoxy methyl silane, dimethoxy dimethyl silane, methoxy trimethyl silane, trimethoxy propyl silane, trimethoxy octyl silane, trimethoxy hexadecyl silane, dimethoxy dipropyl silane, triethoxy methyl silane, triethoxy propyl silane, triethoxy octyl silane, and diethoxy dimethyl silane.

Representative organomercaptosilanes of Formula (II) are, for example, triethoxy mercaptopropyl silane, trimethoxy mercaptopropyl silane, methyl dimethoxy mercaptopropyl silane, methyl diethoxy mercaptopropyl silane, dimethyl methoxy mercaptopropyl silane, triethoxy mercaptoethyl silane, and tripropoxy mercaptopropyl silane.

Some examples of pre-treated silicas (i.e., silicas that have been pre-surface treated with a silane) include, but are not limited to, Ciptane^{®} 255 LD and Ciptane^{®} LP (PPG Industries) silicas that have been pre-treated with a mercaptosilane, and Coupsil^{®} 8113 (Degussa) that is the product of the reaction between organosilane Bis(triethoxysilylpropyl) polysulfide (Si69) and Ultrasil^{®} VN3 silica, and Coupsil^{®} 6508, Agilon^{®} 400 silica from PPG Industries, Agilon^{®} 454 silica from PPG Industries, and Agilon^{®} 458 silica from PPG Industries. Some representative examples of preferred pre-silanized precipitated silicas include Agilon^{®} 400, Agilon^{®} 454 and Agilon^{®} 458 from PPG Industries.

Various commercially available precipitated silicas that may be used in combination with pre-silanized precipitated silica may be used, such as silicas from PPG Industries under the Hi-Sil trademark with designations 210, 243; silicas from Solvay with, for example, designations of Zeosil 1165MP and Zeosil 165GR; and silicas from Evonik with, for example, designations VN2 and VN3.

In one embodiment, the rubber composition is exclusive of addition of silica coupler to the rubber composition (thereby exclusive of silica coupler).

As indicated, in one embodiment, the rubber composition may contain a combination of additional silica coupler added to the rubber composition, particularly a bis(3-triethoxysilylpropyl) polysulfide containing an average of from about 2 to about 4 connecting sulfur atoms in its polysulfidic bridge together with an additional precipitated silica (non-pre-silanized precipitated silica) added to said rubber composition, wherein the ratio of pre-silanized precipitated silica to said precipitated silica is desirably at least 8/1, alternately at least 10/1.

The surface area of silica can be measured in various ways. One method is through nitrogen adsorption in accordance with ASTM D1993-18, "Standard Test Method for Precipitated Silica-Surface Area by Multipoint BET Nitrogen Adsorption," which is referred to herein as nitrogen surface area. Another method is in accordance ASTM D6845-20, "Standard Test Method for Silica, Precipitated, Hydrated-CTAB (Cetyltrimethylammonium Bromide) Surface Area," which is referred to herein as CTAB surface area. The CTAB molecule is relatively large; so it is not adsorbed in micropores or on surface roughness. Thus, the CTAB surface area reflects only the surface of the silica that is available for interaction with rubber molecules.

Carcass plies often use medium nitrogen surface area silica, e.g., of about 160 m 2/g.

### High Surface Area Silica

An exemplary high surface area silica is available as Zeosil^{™} Premium SW from Solvay. This silica has a CTAB surface area of about 250 m²/g. The high surface area silica has a CTAB surface area of at least 200 m²/g, or at least 220 m²/g, or at least 240 m²/g, or at least 250 m²/g. In some embodiments, the high surface area silica has a CTAB surface area of up to 350 m²/g or up to 300 m²/g.

### Coupling Agent

Using a silica coupling agent in combination with precipitated silica can promote low hysteresis and good tear strength for the rubber composition. Suitable coupling agents generally include a first moiety, that is reactive with hydroxyl groups (e.g., silanol groups) that are present on the surface of precipitated silica, and a second moiety capable of reacting with a diene-based elastomer, such as natural rubber and/or synthetic polyisoprene rubber. The two moieties are connected by a linking group, e.g., a hydrocarbyl or sulfidic bridge, such that the precipitated silica is chemically bonded to the elastomer. Examples of silica coupling agents include those containing groups such as alkyl, alkoxy, mercapto, blocked mercapto, sulfide-containing (e.g., monosulfide-based alkoxy-containing, disulfide-based alkoxy-containing, tetrasulfide-based alkoxy-containing), amino, vinyl, epoxy, and combinations thereof.

Specific examples of silane coupling agents include alkoxyorganomercaptosilanes and bis(3-triethoxysilylpropyl)polysulfide containing an average of from 1 to 5 connecting sulfur atoms (preferably 2 to 4) in its polysulfidic bridge. Bis(3-triethoxysilylpropyl)polysulfide having an average of from about 2 to about 2.6 and from about 3.4 to about 3.8, respectively, connecting sulfur atoms in its polysulfidic bridge may be obtained as Si266 ^{™} and Si69 ^{™} from Evonik Industries.

The rubber composition may include at least 0.1 phr, or at least 0.5 phr or at least 1 phr, or up to 6 phr, or up to 3 phr, or up to 2 phr of the silica coupling agent. The silica coupling agent may be present in an amount sufficient to provide a ratio, by weight, of the total amount of coupling agent to silica filler of at least 0.1:100, or at least 1:100, or at least 2:100, or up to 25:100, or up to 20:100, or up to 8:100. When the silica is pretreated with the coupling agent, lower amounts of coupling agent may be used than when the silica is treated in situ with the coupling agent.

Examples of silica dispersing aids include glycols, such as fatty acids, diethylene glycols, alkylene glycols such as polyethylene glycols and polypropylene glycols, fatty acid esters of hydrogenated or non-hydrogenated C₅ or C₆ sugars, polyoxyethylene derivatives of fatty acid esters of hydrogenated or non-hydrogenated C₅ or C₆ sugars, and mixtures thereof. Exemplary fatty acids include stearic acid, palmitic acid, and oleic acid. Exemplary fatty acid esters of hydrogenated and non-hydrogenated C₅ and C₆ sugars (e.g., sorbose, mannose, and arabinose) include sorbitan oleates, such as sorbitan monooleate, dioleate, trioleate and sesquioleate, and sorbitan esters of laurate, palmitate, and stearate fatty acids. Exemplary polyoxyethylene derivatives of fatty acid esters of hydrogenated and non-hydrogenated C₅ and C₆ sugars include polysorbates and polyoxyethylene sorbitan esters, which are analogous to the fatty acid esters of hydrogenated and non-hydrogenated sugars except that ethylene oxide groups are placed on each of the hydroxyl groups.

Exemplary polyalkylene oxides may have a weight average molecular weight Mw of at least 500, such as at least 2,000, or at least 4,000, or up to 15,000, or up to 12,000, or up to 10,000, or up to 8,500. In cases where polyalkylene oxide, e.g., polyethylene glycol, is utilized in the rubber composition, it may be included in an amount of at least 0.1 phr, such as at least 0.2 phr, or at least 0.3 phr, or up to 5 phr, or up to 3 phr, or up to 2 phr, or up to 1 phr, or up to 0.6 phr.

Examples of commercially available polyethylene glycols include Carbowax^{™} PEG 3350 and Carbowax^{™} PEG 8000 from the Dow Chemical Company where the number indicates an approximate weight average molecular weight. Other polyalkylene oxide polymers may be used, as described, for example, in U.S. Pat. Nos 6,322,811 and 4,082,703.

Silica dispersing aids, if used, may be present in a total amount of at least 0.1 wt. %, based on the weight of the silica, or at least 0.5 wt. %, or at least 1 wt. %, or up to 25 wt. %, or up to 20 wt. % or up to 15 wt. %.

### Carbon Black

Commonly employed carbon blacks can be added as well, e.g., as an additional filler component or for the sake of providing the tire component with black color. However, in some embodiments, the rubber composition includes less than 5 phr carbon black or less than 3 phr carbon black, or even no carbon black. Representative examples of carbon blacks include N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 to 145 g/kg and DBP number ranging from 34 cm³/100 g to 150 cm³/100 g.

### Other Reinforcing Fillers

Additional reinforcing fillers, other than the silica and the carbon black, may be utilized, e.g., in total amounts of up to 30 phr, or up to 20 phr, or up to 10 phr, or up to 1 phr, or may be absent. Examples of such additional reinforcing fillers include calcium carbonate, alumina, aluminum hydroxide, clay (reinforcing grades), magnesium hydroxide, boron nitride, aluminum nitride, titanium dioxide, reinforcing zinc oxide, and combinations thereof.

### Tear Strength Agent

A tear strength agent helps to provide improvements in tear strength of the rubber composition. The rubber composition may include at least 0.1 phr, or at least 0.5 phr, or up to 3 phr, or up to 2 phr, or up to 1.2 phr, or up to 1 phr of the tear strength agent.

Examples of tear strength agents include nitrogen-containing organic compounds, such as those of formulae (1) to (8), and mixtures thereof:

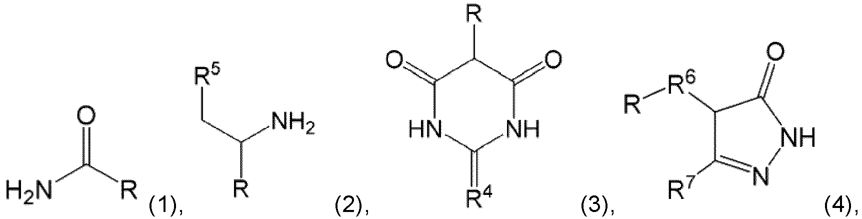

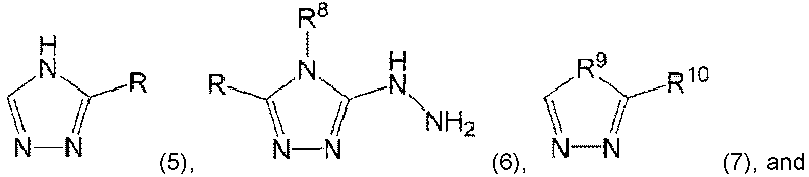

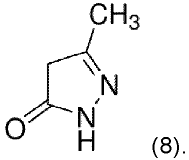

In the formulae, R represents a hydrazide group, an N'-alkylidene hydrazide group, an N-allyl carbamoyl group, a 3-carboxyl acryloyl group, a hydrazine carboxyamino group, a thiocarboxyl group, a thiol group, or a hydrogen atom. R⁴ is a sulfur atom or an oxygen atom. R⁵ is a thiol group or a hydroxy group. R⁶ is an alkylene group having 1 to 4 carbon atoms. R⁷ is an alkyl group, an aralkyl group, or a heterocyclic group. R⁸ is a hydrogen atom or an amino group. R⁹ is a hetero atom. R¹⁰ is a heterocyclic group.

In some embodiments, the tear strength agent includes a heterocyclic ring containing more than one nitrogen atom. For example, the tear strength agent may include 3-methyl-5-pyrazolone (Formula (8), which is available as Acroad^{™} EN-01 from Otsuka Chemical Co., Ltd.

### Cobalt Salt

In some embodiments, the rubber composition includes a cobalt salt. The rubber composition may include at least 0.1 phr, or at least 0.2 phr, or at least 0.3 phr, or up to 5 phr, or up to 2 phr, or up to 1 phr, or up to 0.6 phr of the cobalt salt.

In ply coatings, the cobalt salt can improve the adhesion of the rubber coating to the ply material, in particular if such material is metal, e.g., a brass coated metal, such as steel. Cobalt salts tend to promote high low-strain stiffness values (as evidenced by G' at 10 % strain at 100° C).

In some embodiments, the cobalt salt is an organic salt of cobalt. Examples of organic cobalt salts include cobalt salts of fatty acids and cobalt salts of an aliphatic or alicyclic carboxylic acids containing from 6 to 30 carbon atoms. Examples of such cobalt salts include cobalt naphthenate, cobalt octanoate, cobalt linoleate, cobalt stearate, cobalt oleate, cobalt acetate, cobalt neodecanoate, cobalt tallate, cobalt resinate, cobalt acetonate, in situ salts prepared from cobalt hydroxide and an organic acid such as naphthenic acid, stearic acid, oleic acid, acetic acid, linoleic acid, cobalt-boron complex salts, cobalt-aluminum complex salts. And mixtures thereof. Examples of complex salts containing aluminum and/or boron linked to a divalent cobalt through oxygen atoms and containing at least one acyloxy radical attached to cobalt, include those of the general formula X-Co-[O-T(Y)]ₘ-[O-Co]ₙ-Y, where X is an acyloxy radical, T is selected from boron and aluminum, Y is an alkoxy or acyloxy radical, m is at least 1, and n is 0 or 1. Methods of preparing complex cobalt salts of this type are described, for example, in U.S. Pat. No. 3,296,242A.

Cobalt boron complex organic salts which may be used are available as Manobond^{™} C from Borchers Americas, Inc., and cobalt boro-neodecanoate, available as Comend^{™} from Shepherd Chemical.

In another embodiment, the cobalt salt is an inorganic salt, such as cobalt chloride.

In another embodiment, the rubber composition may be essentially cobalt free, i.e., include less than 0.1 phr, or less than 0.05 phr, or 0 phr of cobalt salt.

### Other Compounding ingredients

The rubber composition may include additional components such as antidegradants, processing aids, peptizing agents, sulfur-based curing agents, activators, cure accelerators, and cure retardants.

The rubber composition may include at least 0.1 phr, or at least 1 phr, or at least 2 phr, or up to 10 phr, or up to 8 phr, or up to 5 phr of antidegradants, such as antiozonants and/or antioxidants. These compounds assist in protecting the tire against oxidation and ozonation. Representative antidegradants include monophenols, bisphenols, thiobisphenols, polyphenols, hydroquinone derivatives, phosphites, phosphate blends, thioesters, naphthylamines, diphenol amines as well as other diaryl amine derivatives, para-phenylene diamines, quinolines, and blended amines. Exemplary antioxidants include 2,2,4-trimethyl-1,2-dihydroquinoline (TMQ), diphenyl-p-phenylenediamine (PPD), N-(1,3-dimethylbutyl)-N'-phenyl-p-phenylenediamine (6PPD), and others, such as those disclosed in The Vanderbilt Rubber Handbook (1978), pages 344 346.

Exemplary processing aids include liquid plasticizers, waxes, resins, and combinations thereof. Liquid plasticizers, such as processing oils, have a Tg that below 0°C, generally well below, such as less than -30°C, or less than -40°C, or less than - 50°C, such as a Tg of 0°C to -100°C. Processing oil, in relatively low concentrations, aids in mixing the ingredients for the rubber composition and/or promotes the processing of the rubber composition. Representative processing oils which may be used in the rubber composition include aliphatic oils, aromatic oils, naphthenic oils, triglyceride oils, low polycyclic aromatics (PCA) oils, such as mild extract solvate (MES), treated distillate aromatic extract (TDAE), special residual aromatic extract (SRAE), and heavy naphthenic oils, and mixtures thereof. Triglyceride oils that can be used include vegetable oils, such as castor oil, soybean oil, canola oil (rapeseed oil), corn oil, cottonseed oil, olive oil, palm oil, safflower oil, sunflower oil, coconut oil, and peanut oil. Castor oil is a triglyceride oil that contains approximately 87 wt. % ricinoleic acid, 7 wt. % oleic acid, 3 wt. % linoleic acid, 2 wt. % palmitic acid, and 1 wt. % stearic acid. Example naphthenic processing oils include Hyprene^{™} 100 from Ergon Refining, Inc., and Tufflo 100^{™} from the Barton Solvent Company. The processing oil(s) may be used in the rubber composition at from about 0 to about 30 phr, such as at least 0.5 phr, or at least 1 phr, or up to 10 phr, or up to 7 phr, or up to 5 phr, or up to 3 phr. In some embodiments, an oil may be used as a carrier for one or more other components, such as for the elemental sulfur.

Exemplary resins which may be used in the rubber composition are generally solid or viscous at room temperature and include tackifying resins, such as unreactive phenol formaldehyde, and stiffness resins, such as reactive phenol formaldehyde resins and resorcinol or resorcinol and hexamethylene tetramine, hexa(methoxymethyl) melamine (HMMM) resins, benzoxazine resins, and hydrocarbon resins. Example hydrocarbon resins include aromatic, aliphatic, and cycloaliphatic resins.

In some embodiments the rubber composition includes 1 to 10 phr of resin. In another embodiment, the rubber composition is free or substantially free of resin. This is a benefit because resins can constitute potential threats to environment, health, and safety during mixing and/or tire manufacturing. Thus, identifying compositions with good adhesion and/or stiffness properties while avoiding resins is of interest. In particular, the amount of resin in the composition may be less than 1 phr, or less than 0.5 phr, or less than 0.2 phr or 0 phr.

Suitable waxes, particularly microcrystalline waxes, may be of the type described in The Vanderbilt Rubber Handbook (1978), Pages 346 and 347. Waxes may be absent from the rubber composition or composition or used in an amount of at least 1 phr or up to 5 phr.

Exemplary peptizing agents include pentachlorophenol dibenzamidodiphenyl disulfide. Peptizing agents may be absent from the rubber composition or used in an amount of at least 0.1 phr, or up to 1 phr, or up to 0.4 phr.

Exemplary sulfur-based curing agents include elemental sulfur (free sulfur) and sulfur-donating curing agents, such as amine disulfides, polymeric polysulfides, and sulfur olefin adducts. The amount of sulfur-based curing agent may vary, depending on the type of rubber and particular type of curing agent, but may range from 0.1 phr to 10 phr, such as at least 0.5 phr, or at least 1 phr, or at least 2 phr, or up to 8 phr, or up to 6 phr.

Exemplary activators for sulfur curing agents include fatty acids and zinc oxide. The zinc oxide may help to improve adhesion between metal wire and the coating rubber compound upon sulfur curing. The rubber composition may include from 1 phr to 20 phr of zinc oxide, such as at least 5 phr, or at least 7 phr, or up to 15 phr, or up to 12 phr, or up to 10 phr of zinc oxide. Exemplary fatty acids include stearic acid and mixtures of stearic acid with other fatty acids. The rubber composition may include from 0.5 phr of fatty acid, such as at least 0.7 phr, or at least 1 phr, or at least 1.2 phr, or up to 10 phr, or up to 5 phr, or up to 2 phr of fatty acid.

Accelerators may be used to control the time and/or temperature required for vulcanization and to improve the properties of the vulcanizate. The accelerator may be at least 0.2 phr, or at least 0.5 phr, or at least 1 phr, or up to 5 phr, or up to 3 phr in the rubber composition.

Exemplary accelerators for the sulfur-based curing agent include amines, guanidines, thioureas, thiols, thiazoles, thiurams, sulfenamides, dithiocarbamates and xanthates. Examples of thiazole cure accelerators include 2-mercaptobenzothiazole, 2,2'-dithiobis(benzothiazole) (MBTS), N-cyclohexyl-2-benzothiazole-sulfenamide (CBS), and N-tert-butyl-2-benzothiazole-sulfenamide (TBBS), guanidine vulcanization accelerators, such as diphenyl guanidine (DPG), and mixtures thereof. In some embodiments, a single accelerator system may be used, i.e., primary accelerator. In other embodiments, a primary accelerator is used in combination with a secondary accelerator, with the primary accelerator becoming active at a lower temperature than the secondary accelerator but losing its activity quicker. The secondary accelerator may be used in a smaller amount than the primary accelerator. The primary accelerator may be a sulfenamide and the secondary accelerator may be a guanidine, dithiocarbamate, or thiuram compound, such as diphenyl guanidine.

As will be appreciated, the rubber composition may include other ingredients than those exemplified herein.

Table 1 illustrates exemplary rubber compositions, expressed in phr. All ingredients are expressed on an actives basis (i.e., not including diluents, carriers).

**TABLE 1: Example Rubber Compositions**

| Component | Example 1 | Example 2 | Example 3 |
|---|---|---|---|
| cis 1,4 Polyisoprene, e.g., Natural Rubber and/or synthetic polyisoprene | 60-100 | 90-100 | 95-100 |
| Other elastomers | 0-40 | 0-10 | 0-5 |
| Pre-Silanized Precipitated Silica | 30-80 | 40-70 | 50-60 |
| High Surface Area Silica (CTAB surface area of at least 200 m²/g) | 1-20 | 3-12 | 4-9 |
| Tear strength agent, e.g., 3-methyl-5-pyrazolone | 0.1-3 | 0.3-2 | 0.5-1.1 |
| Silica coupling agent | 0-6 | 0.2-3.5 | 0.5-3 |
| Cobalt salt | 0.1-5 | 0.2-1 | 0.3-0.6 |
| Antidegradant | 0.1-10 | 1-8 | 2-5 |
| Oil, e.g., naphthenic, paraffinic, synthetic, and/or vegetable | 0-30 | 0.5-10 | 1-7 |
| Fatty Acid(s) | 0.5-10 | 0.7-5 | 1-2 |
| Zinc oxide | 1-20 | 5-15 | 7-12 |
| Sulfur-based curing agent, e.g., elemental sulfur | 0.1-10 | 1-10 | 2-6.5 |
| Cure accelerator | 0.2-5 | 0.5-5 | 1-3 |
| Other components | 0-20 | 0-5 | 0-2 |

### Forming the rubber composition

The various components of the rubber layer can be mixed together using convenient rubber mixing equipment, such as an internal rubber mixer. In general, the elastomers, e.g., butyl rubber and natural rubber, are blended in at least one non-productive mixing stage, in the absence of the curing agent followed by a final, or productive, mixing stage in which the curing agent (and possibly one or more of the additional ingredients) is added. In the productive mixing stage, the mixing typically occurs at a temperature, or ultimate temperature, lower than the mixing temperature(s) used in the preceding non-productive mix stage(s).

In some embodiments, in a first, non-productive stage (or stages), the components, other than the sulfur-based curing agent, are stirred in a mixer set at a suitable temperature, such as at least 100°C, or at least 110°C, or up to 165 °C. The temperature of the mixture rises as it is stirred. When the temperature reaches about 150°C - 165°C, the mixture is dropped from the mixer and allowed to cool before returning it to the mixer. In a second, productive stage, the mixture is returned to the mixer with the curing agent for from 1 to 5 minutes, to incorporate the curing agent into the mixture, but without appreciably curing the mixture.

Vulcanization of a pneumatic tire incorporating the rubber composition may be carried out at a temperature of 100° C to 200° C, such as from 110° C to 180° C. Any of the usual vulcanization processes may be used such as heating in a press or mold, heating with superheated steam or hot air. Such tires can be built, shaped, molded and cured by various methods which are known and will be readily apparent to those having skill in such art.

The rubber composition typically has sufficient viscosity and unvulcanized tack to enable its incorporation into an unvulcanized tire without significantly departing from conventional tire building techniques. In some embodiments, strips of the rubber composition are formed.

### Tire Construction

To form a cord-reinforced rubber component, such as a ply, a plurality of cords, arranged generally in parallel, are coated with the rubber composition, prior to curing the rubber composition. The coated cords may be passed through a calender which applies pressure and optionally heat to provide the ply with relatively smooth upper and lower surfaces defined by the rubber composition.

A ply or plies, formed of the rubber composition described above, may be built into an unvulcanized tubeless pneumatic rubber tire prior to undergoing vulcanization. Also disclosed is a tire including the vulcanized rubber composition.

In some embodiments, the tire includes a ply, e.g., one or more of a belt ply, a carcass ply, an overlay ply (covering one or more belt plies), and a ply strip (which may be spirally wound in a circumferential direction of the tire). The ply comprises the exemplary rubber composition, e.g., in the form of a rubber coating added to a textile or wire material. The ply may be formed in a calender device (e.g., a wire calender or textile calender). The coating comprises or consists of the rubber composition in accordance with one or more of its embodiments described herein.

The tire containing plies formed of the exemplary rubber composition may be a race tire, passenger tire, aircraft tire, agricultural tire, earthmover tire, off-the-road tire, truck tire, or the like. The tire may be a radial or bias-type tire. In some embodiments, the tire is a pneumatic radial (medium) truck tire.

### EXAMPLES

Rubber compositions are prepared in a Banbury mixer using three separate stages of addition, with two non-productive mixing stages, for total of about 4 minutes to a temperature of about 140 °C. The second non-productive stage is followed by a productive mixing stage for about 2 minutes to a temperature of about 105 °C where sulfur and curatives are added.

Table 1 shows amounts of components of the example rubber compositions, expressed in phr.

Example A uses 55 phr of a pre-silanized precipitated silica. Example B corresponds to Example A, but further incorporates 6.4 phr of a high surface area silica. Example C corresponds to Example B, but further includes 0.6 phr of a tear strength agent. Example D corresponds to Example C, but with 1.0 phr of the tear strength agent instead of 0.6 phr.

Amounts of natural rubber, silica coupling agent, and various additives are the same for each example.

**TABLE 2 - Rubber Compositions (phr)**

| Component | Ex. A | Ex. B | Ex. C | Ex. D |
|---|---|---|---|---|
| Natural Rubber (cis 1,4 Polyisoprene) | 100 | 100 | 100 | 100 |
| Pre-silanized Precipitated Silica¹ | 55 | 55 | 55 | 55 |
| Silica², high surface area | | 6.4 | 6.4 | 6.4 |
| Tear strength agent³ | | | 0.6 | 1 |
| Silica coupling agent⁴ | 2.75 | 2.75 | 2.75 | 2.75 |
| Carbon black (as carrier for coupling agent) | 2.75 | 2.75 | 2.75 | 2.75 |
| Antidegradants⁵ | 4.5 | 4.5 | 4.5 | 4.5 |
| Oils | 2.9 | 2.9 | 2.9 | 2.9 |
| Fatty acid⁷ | 0.75 | 0.75 | 0.75 | 0.75 |
| Zinc oxide | 9 | 9 | 9 | 9 |
| Cobalt Salt⁸ | 0.5 | 0.5 | 0.5 | 0.5 |
| Accelerator⁹ | 2 | 2 | 2 | 2 |
| Sulfur-based curing agent¹⁰ | 6 | 6 | 6 | 6 |

| | | | | |
|---|---|---|---|---|
| ^{1.} AGILON^{®} 400G, with a CTAB surface area of 140 m²/g. ^{2.} ZEOSIL^{®} Premium SW from Solvay, with a CTAB surface area of 250 m²/g. ^{3.} 3-methyl-5-pyrazolone, obtained as ACROAD^{®} EN-01 from Otsuka Chemical Co., Ltd. ^{4.} bis(3-triethoxysilylpropyl) polysulfide, obtained as SI 69^{®} from Evonik Industries. ^{5.} Mixture of dihydroquinoline with one or more phenylene diamine-based antioxidants. ^{6.} Rubber processing oil including naphthenic oil. ^{7.} Primarily stearic acid (at least 90% stearic acid) as a blend of stearic, palmitic, and oleic acids. ^{8.} Cobalt neodecanoate salt, 20.5 wt.% cobalt. ^{9.} Sulphenamide. ^{10.} Elemental sulfur. Examples A, B and E use Crystex^{™}HDOT20 from Flexus, which incorporates a carrier oil (noted separately in Table 2), while Examples C and D use Crystex^{™} OT33AS, which incorporates a carrier oil and silica (noted separately in Table 2) | | | | |

Rubber compositions are formed into test samples and are cured for about 32 minutes to a temperature of about 150 °C. The following tests are performed on the cured strips:

A rubber process analyzer (RPA), RPA2000 from Alpha Technologies, is used to obtain values for the Storage Modulus G' at 10% strain (Mpa) at a temperature of 100°C, in accordance with ASTM D5289-19a, "Standard Test Method for Rubber Property-Vulcanization Using Rotorless Cure Meters." Tangent Δ values (the ratio of G" to G') are also obtained.

Tear strength data is obtained by a peel strength adhesion test to determine interfacial adhesion between two samples of a rubber composition. Interfacial adhesion is determined by pulling one rubber composition away from the other at a right angle to the untorn test specimen with the two ends of the rubber compositions being pulled apart at a 180° angle to each other using an Instron instrument according to DIN 53539, 1979 Edition, September 1979.

Wire cord adhesion data is determined according to ASTM D2229-10(2014), "Standard Test Method for Adhesion Between Steel Tire Cords and Rubber." For this test, a block of the rubber composition is formed in a Four-Cavity Steel Cord Adhesion Mold fitted with steel cores. This test method covers the determination of the force required to pull a steel cord from the block of vulcanized rubber.

Wire cord adhesion coverage is determined by visual observation (higher is better).

Elongation at break (%) is determined with an Automated Testing System instrument by the Instron Corporation, in accordance with ASTM D412-06ae2, "Standard Test Methods for Vulcanized Rubber and Thermoplastic Elastomers-Tension."

Rebound resilience is measured on a ZwickRoell^{™} 5109 rebound resilience tester according to DIN 53512, April 2000, "Determination the rebound resilience of rubber using the Schob pendulum," at given temperature (100°C).

Cut growth is measured according to ASTM D813 using the pierced groove flex test at 95 °C.

The physical properties of the rubber compositions are shown in Table 3.

**TABLE 3: Properties of Rubber Compositions (Normalized to 100 for Example A)**

| Test | Ex. A | Ex. B | Ex. C | Ex. D |
|---|---|---|---|---|
| G'(10% strain) Mpa | 100 | 120 | 187 | 173 |
| Tan Δ at 10% strain | 100 | 122 | 140 | 138 |
| Rebound (100 °C), % | 100 | 95 | 98 | 98 |
| Tear Strength, N/mm | 100 | 167 | 400 | 367 |
| Elongation at Break, % | 100 | 115 | 121 | 123 |
| Wire Cord Adhesion 10-day Water aged N | 100 | 146 | 205 | 209 |
| Wire Cord Adhesion Coverage, % | 100 | 133 | 189 | 322 |
| Fatigue Cut Growth, min/mm | 100 | 125 | 225 | 242 |

Inclusion of the pre-silanized precipitated silica alone (Example A) gives low hysteresis, but with a significant reduction in stiffness, tear and wire adhesion. Adding 6.4 phr of high surface area silica (Example B) increases elongation, while increasing stiffness with a slight improvement in tear, however wire adhesion is not improved. Adding 0.6 phr of tear strength agent (Example C) or 1.0 phr of tear strength agent (Example D) leads to further increase stiffness, tear and wire adhesion without impact to hysteresis. Also, fatigue crack growth properties are improved when additives are used together. The inclusion of these components together can balance durability indicators, while using low hysteresis fillers.

Unless otherwise indicated, each chemical or composition referred to herein should be interpreted as being a commercial grade material which may contain the isomers, by-products, derivatives, and other such materials which are normally understood to be present in the commercial grade. However, the amount of each chemical component is presented exclusive of any solvent or diluent oil, which may be customarily present in the commercial material, unless otherwise indicated.

## Claims

1. A rubber composition comprising:
100 phr of elastomer, the elastomer comprising 60 phr to 100 phr of a conjugated diene elastomer;
a pre-silanized precipitated silica;
a relatively high surface area silica;
at least 0.1 phr of a tear strength agent;
a sulfur-based curing agent; and
an accelerator for the curing agent.

2. The rubber composition of claim 1, wherein the rubber composition comprises 30 phr to 80 phr or 40 phr to 70 phr of the pre-silanized precipitated silica; 1 phr to 20 phr or 3 phr to 12 phr of the relatively high surface area silica; and 0.1 phr to 3 phr or 0.3 phr to 2 phr of the tear strength agent.

3. The rubber composition of claim 2, wherein the rubber composition comprises 50 phr to 60 phr of the pre-silanized precipitated silica; 4 phr to 9 phr of the relatively high surface area silica; and 0.5 phr to 1.1 phr of the tear strength agent.

4. The rubber composition of at least one of the previous claims, wherein the pre-silanized precipitated silica has a CTAB surface area of 130 m²/g to 210 m²/g.

5. The rubber composition of at least one of the previous claims, wherein the rubber composition is free of carbon black.

6. The rubber composition of at least one of the previous claims, comprising from 0 phr to 5 phr of carbon black and/or comprising at least 0.1 phr of a silica coupling agent.

7. The rubber composition of at least one of the previous claims, further comprising at least 0.1 phr of a cobalt salt and/or at least 1 phr of zinc oxide.

8. The rubber composition of at least one of the previous claims, wherein the tear strength agent is or comprises 3-methyl-5-pyrazolone.

9. The rubber composition of at least one of the previous claims, further comprising at least 0.5 phr of a fatty acid.

10. The rubber composition of at least one of the previous claims, further comprising at least 0.2 phr of the accelerator.

11. A cord-reinforced rubber component for a tire, preferably a tire ply, comprising a plurality of cords encapsulated by the rubber composition of at least one of the previous claims.

12. The cord-reinforced rubber component of claim 11, wherein the cords each comprise at least one of metal wires and a fabric material.

13. The cord-reinforced rubber component of claim 11 or 12 in the form or a tire ply that is formed by coating a plurality of cords with a rubber composition and curing the rubber composition, the rubber composition comprising:
100 phr of elastomer comprising 60 to 100 phr polyisoprene, preferably cis 1,4 polyisoprene;
30 phr to 80 phr of a pre-silanized precipitated silica;
1 phr to 20 phr silica having a CTAB surface area of at least 200 m²/g;
0.1 phr to 3 phr of a tear strength agent;
0 phr to 6 phr of a silica coupling agent;
0.1 phr to 5 phr of a cobalt salt;
0.1 phr to 10 phr of an antidegradant;
0.5 phr to 10 phr of a fatty acid;
1 phr to 20 phr of zinc oxide;
0.1 phr to 10 phr of a sulfur-based curing agent; and
0.2 phr to 5 phr of a cure accelerator.

14. A tire comprising the cord-reinforced rubber component of at least one of the claims 11, 12 or 13.

15. A method of forming a cord-reinforced rubber component comprising:
forming a rubber composition, comprising combining 100 phr of elastomer, the elastomer comprising 60 phr to 100 phr of a conjugated diene elastomer, a pre-silanized silica, a relatively high surface area silica, at least 0.1 phr of a tear strength agent, a sulfur-based curing agent, and an accelerator for the curing agent;
coating at least one cord with the rubber composition; and
curing the rubber composition coating the at least one cord to form the cord-reinforced rubber component.
